# EUROPEAN PATENT SPECIFICATION

(11) **EP 3 245 921 B1**
(45) Date of publication and mention of the grant of the patent: **11.05.2022**
(21) Application number: 15881694.2
(22) Date of filing: 16.06.2015
(51) Int. Cl.: A47J 36/24, A47J 36/04, H05B 3/20, H05B 3/26, H05B 3/74, H05B 6/12

(54) **ELECTROTHERMAL FILM LAYER MANUFACTURING METHOD, ELECTROTHERMAL FILM LAYER, ELECTRICALLY-HEATING PLATE, AND COOKING UTENSIL**
VERFAHREN ZUR HERSTELLUNG EINER ELEKTROTHERMISCHEN FOLIENSCHICHT, ELEKTROTHERMISCHE FOLIENSCHICHT, ELEKTROHEIZPLATTE UND KOCHUTENSIL
PROCÉDÉ DE PRODUCTION DE COUCHE DE FILM ÉLECTROTHERMIQUE, COUCHE DE FILM ÉLECTROTHERMIQUE, PLAQUE DE CHAUFFAGE ÉLECTRIQUE, ET USTENSILE DE CUISSON

(30) Priority: 11.02.2015 CN 201510077084; 11.02.2015 CN 201510077081; 11.02.2015 CN 201510076925; 11.02.2015 CN 201510072472; 11.02.2015 CN 201510077182; 11.02.2015 CN 201510072549; 12.02.2015 CN 201510076320; 12.02.2015 CN 201520102433 U; 12.02.2015 CN 201520104188 U; 12.02.2015 CN 201510075747; 12.02.2015 CN 201520104398 U
(43) Date of publication of application: 22.11.2017
(73) Proprietor: Foshan Shunde Midea Electrical Heating Appliances Manufacturing Co. Ltd., Foshan, Guangdong 528311 (CN); Midea Group Co., Ltd., Guangdong 528311 (CN)
(72) Inventor: YIN, Shanzhang, Foshan Guangdong 528311 (CN); FANG, Zhen, Foshan Guangdong 528311 (CN); WANG, Xinyuan, Foshan Guangdong 528311 (CN); ZHANG, Jianliang, Foshan Guangdong 528311 (CN); ZHANG, Guilin, Foshan Guangdong 528311 (CN)
(74) Representative: Lam, Alvin
(86) International application number: PCT/CN2015/081566
(87) International publication number: WO 2016/127533

(56) References cited:
- CN-A- 1 174 487
- CN-A- 1 174 487
- CN-A- 101 668 359
- CN-A- 102 045 900
- CN-A- 102 291 860
- CN-A- 103 716 925
- CN-B- 102 291 860
- CN-U- 2 035 607
- CN-U- 201 515 516
- CN-U- 202 820 926
- CN-Y- 201 100 690
- DE-A1-102009 022 526
- JP-A- 2000 012 207
- US-A- 4 990 747
- US-A1- 2014 314 396
- HAO, XIAOHUI ET AL.: 'Preparation and Characteristics of High-temperature Infrared Electrothermal Films' LASER & INFRARED vol. 34, no. 3, 30 June 2004, pages 206 - 208, XP009500143
- None

## Description

### BACKGROUND

At present, domestic and overseas electric heating appliances (such as induction cookers, rice cookers and other cooking appliances) generally use a traditional electric wire heating technology or an electromagnetic heating technology. However, electric-thermal conversion energy efficiency ratios of such technologies are relatively low, which cannot fully meet the national energy conservation and environmental protection requirements, resulting in a lot of energy waste.

Therefore, how to improve the electric-thermal conversion energy efficiency ratio of electric heating appliances to improve an utilization rate of energy, to better meet the requirements of national energy conservation and environmental protection is a technical problem that urgently needs to be solved by those skilled in the art. CN101668359 relates to an electric heating film and a manufacturing method thereof.

### SUMMARY

The present disclosure is intended to solve at least one of the technical problems that exist in the related art.

Therefore, embodiments of the present disclosure provide a method for manufacturing an electrothermal film layer according to claim 1.

An electrothermal film layer manufactured by this method could improve the energy efficiency ratio of the electro-thermal conversion, realize the purpose of energy conservation, and better meet the requirements of the country for the energy conservation of the product. The electrothermal film layer has a significant practicability.

In order to realize the above purposes, an embodiment of a first aspect of the present disclosure provides a method for manufacturing an electrothermal film layer. The electrothermal film layer is formed on a surface of an insulating substrate with a high temperature resistance by subjecting a mixture including tin dioxide, antimony and fluorine to spraying, deposition or evaporation, and the electrothermal film layer and the insulating substrate are subjected to annealing.

The method for manufacturing the electrothermal film layer according to embodiments of the present disclosure is simple and easy to operate. The electrothermal film layer manufactured by this method could convert radiant heat energy into far-infrared heat energy, realize a rapid increase of temperature, reduce temperature loss caused by moisture-removing, enhance a speed of heat absorption, reduce heat loss, so as to effectively improve radiation heat conduction efficiency and to achieve the purpose of energy conservation, as well as to better meet the requirements of the country for the energy conservation of the product.

In addition, the method for manufacturing the electrothermal film layer according to the above embodiment of the present disclosure further has the following additional technical features.

In an embodiment of the present disclosure, based on a total mass of the mixture of tin dioxide, antimony and fluorine, an amount of antimony is in a range of 1.0 to 2.0%, and an amount of fluorine is in a range of 0.1 to 0.3%, thereby providing the electrothermal film layer with an improved spectral emissivity and thermal radiation efficiency, as well as a better practicability.

In an embodiment of the present disclosure, a mass ratio of tin oxide, antimony and fluorine is 98.35: 1.5: 0.15. The electrothermal film layer manufactured with such a parameter has a good spectral emissivity, a good thermal radiation efficiency, and a high heat utilization efficiency.

In an embodiment of the present disclosure, the mixture further includes Cr₂O₃, MnO₂ and Ni₂O₃. This could further improve the spectral emissivity and thermal radiation efficiency of the electrothermal film layer, and the heat utilization efficiency could be up to 96% or more, better realizing the purpose of energy conservation of the product.

In an embodiment of the present disclosure, the annealing is performed at a temperature of 450 to 600 °C.

In an embodiment of the present disclosure, the annealing is performed for 15 to 25 minutes, and the electrothermal film layer manufactured with the above parameter has good stability and electrical properties as well as high heat utilization efficiency.

An embodiment of a second aspect of the present disclosure provides an electrothermal film layer manufactured by a method for manufacturing an electrothermal film layer according to any one of the above embodiments.

The electrothermal film layer according to embodiments of the present disclosure could convert radiant heat energy into far-infrared heat energy, realize a rapid increase of temperature, reduce temperature loss caused by moisture-removing, enhance a speed of heat absorption, reduce heat loss, so as to effectively improve radiation heat conduction efficiency and to achieve the purpose of energy conservation, as well as to better meet the requirements of the country for the energy conservation of the product. Cooking appliances with such an electrothermal film layer are more practical.

An embodiment of a third aspect of the present disclosure provides an electric heating disc including: a disc body; and an electrothermal film layer as described in the above embodiments. The electrothermal film layer is attached to the disc body.

In the electric heating disc according to an embodiment of the present disclosure, the electrothermal film layer could convert radiant heat energy into far-infrared heat energy during use, realize a rapid increase of temperature of a cookware, reduce temperature loss caused by moisture-removing, enhance a speed of heat absorption, reduce heat loss, thereby effectively improving the radiation heat conduction efficiency (reaching up to 96% or more), achieving the purpose of energy conservation, as well as better meeting the requirements of the country for the energy conservation of the product. Cooking appliances with such an electric heating disc are more practical.

In addition, the electric heating disc according to the above embodiments of the present disclosure further has the following additional technical features.

In an embodiment of the present disclosure, the disc body includes an upper disc body, to a lower surface of which the electrothermal film layer is attached and a lower disc body located below the upper disc body and assembled with the upper disc body, in order to better utilize heat energy to rapidly heat the pot body placed on an upper surface of the lower disc body.

Of course, the electrothermal layer may be attached to an upper surface of the upper disc body or to the upper or lower surface of the lower disc body. In an embodiment of the present disclosure, an electrode film is further provided on the lower surface of the upper disc body, and the electrode film is electrically connected with the electrothermal film layer. An electrode is provided on the lower disc body. An upper end of the electrode is electrically connected with the electrode film. A lower end of the electrode extends downwardly through the lower disc body and is connected with the power supply to supply power to the electrothermal film layer.

Of course, the purpose of the present disclosure could also be achieved if the electrode film is replaced with an electric conductor such as a power supply line, which is intended to fall into the scope of the present disclosure, and will not be elaborated herein.

In an embodiment of the present disclosure, an upper surface of the lower disc body has a stepped hole. The lower end of the electrode extends downwardly through the stepped holes. The upper end of the electrode is supported by a stepped surface of the stepped hole. A spring is provided between the upper end of the electrode and the stepped surface of the stepped hole. The spring is adapted to support the upper end of the electrode so as to make the electrode be pressed against the electrode film as well as to avoid a loose contact between the electrode and the electrode film, thereby providing a better electrical connection performance.

In an embodiment of the present disclosure, the electrothermal film layer has an annular shape, and two electrode films, two electrodes, and two stepped holes are symmetrically arranged, and inner ends of the two electrode films are located at an inner edge of the electrothermal film layer, while outer ends of the two electrode films are located at an outer edge of the electrothermal film layer, and upper end surfaces of the two electrodes are pressed against outer edges of the two electrode films, respectively, in order to energize with the whole electrothermal film layer to achieve a maximum utilization of the electrothermal film layer.

In an embodiment of the present disclosure, the upper disc body is a glass carrier with a high temperature resistance, and the lower disc body is a ceramic carrier with a high temperature resistance.

It is also possible that the lower disc body is a glass carrier with a high temperature resistance, and the upper disc body is a ceramic carrier with a high temperature resistance. The purpose of the present disclosure could also be achieved in such a manner.

In an embodiment of the present disclosure, the two electrode films are manufactured by a mask sputtering process and each have a thickness of 3 to 10 µm, and a ratio of a width to a length of each electrode film is in a range from 1: 4.5 mm to 1: 5.5 mm according to a ring width of the electrothermal film layer of the electric heating disc. The electrothermal film layer is formed by spraying with a thickness in a proportional function from 0.5 µm at the inner edge to 1.5 µm at the outer edge at a spraying power of 3 to 5 watts per square centimeter so as to avoid a temperature imbalance of a heated surface.

At a joint of the electrode film made of an alloy and the upper end surface of the electrode, a total current and an allowable working current density should be greater than or equal to 3.0 times a total power of the electrothermal film layer. A thickness of an upper portion of the electrode above the stepped surface is 1.0 mm. With a spring force provided by the spring, the electrode jacked up by the spring is in close contact with the electrode film to build a contact connection between the electrode and the electrode film. The lower end of the electrode is tightly connected with the power supply, so that the safety, stability and reliability of the connection between the power supply and the (nano-far-infrared) electric heating disc could be improved.

The electrothermal film layer manufactured under this condition has a resistivity of up to 4 × 10⁻⁴ Ω•cm, a visible light transmittance of greater than 90%, and an average power density of up to 32 W/cm2, ensuring the stability and reliability of the far-infrared electric heating disc.

In an embodiment of the present disclosure, the electric heating disc is a nano-far-infrared electric heating disc, that is, the electrothermal film layer is a nano-far-infrared electrothermal film layer.

An embodiment of a fourth aspect of the present disclosure provides a cooking appliance including an electric heating disc according to any one of the above embodiments.

The cooking appliance includes an induction cooker, a rice cooker, an electric pressure cooker and so on, and the cooking appliance has all the advantages of any one of the above embodiments, which will be elaborated herein.

Additional aspects and advantages of the present disclosure will become apparent from the following description, or may be learned by practice of the disclosure.

### BRIEF DESCRIPTION OF THE DRAWINGS

Fig. 1 is a schematic cross-sectional view of an electric heating disc according to an embodiment of the present disclosure;
Fig. 2 is a schematic exploded view of the electric heating disc shown in Fig 1.

References:
1: electrothermal film layer; 2: upper disc body; 3: lower disc body; 4: electrode film; 5: electrode; 6: stepped hole; 7: spring.

### DETAILED DESCRIPTION

The present disclosure will now be described in further detail with reference to the drawings and specific embodiments in order to provide a clearer understanding of the above purposes, features and advantages of the present disclosure. It should be noted that the features of the embodiments and embodiments of the present disclosure may be combined with each other without conflict.

A method for manufacturing an electrothermal film layer according to some embodiments of the present disclosure will be described below with reference to the drawings.

An embodiment of a first aspect of the present disclosure provides a method for manufacturing an electrothermal film layer. The electrothermal film layer is formed on a surface of an insulating substrate with a high temperature resistance by subjecting a mixture including tin dioxide, antimony and fluorine to spraying, deposition or evaporation, and the electrothermal film layer and the insulating substrate with the high temperature resistance are subjected to annealing so that the electrothermal film layer is attached to the insulating substrate with the high temperature resistance.

The method for manufacturing the electrothermal film layer according to embodiments of the present disclosure is simple and easy to operate. The electrothermal film layer manufactured by this method could convert radiant heat energy into far-infrared heat energy, realize a rapid increase of temperature, reduce temperature loss caused by moisture-removing, enhance a speed of heat absorption, reduce heat loss, so as to effectively improve radiation heat conduction efficiency and to achieve the purpose of energy conservation, as well as to better meet the requirements of the country for the energy conservation of the product.

Impedance of the electrothermal film layer manufactured by this method decreases with a temperature increase, which could effectively improve the stability of the membrane resistance of the electrothermal film layer, therefore solving the problem of power stability of the far-infrared electrothermal film.

In addition, the method for manufacturing the electrothermal film layer according to the above embodiment of the present disclosure further has the following additional technical features.

In an embodiment of the present disclosure, based on a total mass of the mixture of tin dioxide, antimony and fluorine, an amount of antimony is in a range of 1.0 to 2.0%, and an amount of fluorine is in a range of 0.1 to 0.3%, thereby providing the electrothermal film layer with an improved spectral emissivity and thermal radiation efficiency, as well as a better practicability.

In an embodiment of the present disclosure, a mass ratio of tin oxide, antimony and fluorine is 98.35: 1.5: 0.15. The electrothermal film layer manufactured with such a parameter has a good spectral emissivity, a good thermal radiation efficiency, and a high heat utilization efficiency.

In an embodiment of the present disclosure, the mixture further includes Cr₂O₃, MnO₂ and Ni₂O₃. This could further improve the spectral emissivity and thermal radiation efficiency of the electrothermal film layer, and the heat utilization efficiency could be up to 96% or more, better realizing the purpose of energy conservation of the product.

In an embodiment of the present disclosure, the annealing is performed at a temperature of 450 to 600 °C, and the annealing is performed for 15 to 25 minutes. The electrothermal film layer manufactured with above parameters has good stability and electrical properties as well as high heat utilization efficiency.

In a first specific embodiment of the present disclosure, based on a total mass of the mixture of tin dioxide, antimony and fluorine, an amount of antimony is 1.0 %, and an amount of fluorine is 0.1%, the annealing is performed at a temperature of 450 °C for 15 minutes, and the electrothermal film layer is prepared by spraying, deposition or evaporation.

In a second specific embodiment of the present disclosure, based on a total mass of the mixture of tin dioxide, antimony and fluorine, an amount of antimony is 2.0 %, and an amount of fluorine is 0.3%, the annealing is performed at a temperature of 600 °C for 25 minutes, and the electrothermal film is prepared by spraying, deposition or evaporation.

In a third specific embodiment of the present disclosure, based on a total mass of the mixture of tin dioxide, antimony and fluorine, an amount of antimony is 1.5%, and an amount of fluorine is 0.15%, the annealing is performed at a temperature of 550 °C for 20 minutes, and the electrothermal film is prepared by spraying, deposition or evaporation.

The electrothermal film layers manufactured by the above three methods all could convert radiant heat energy into far-infrared heat energy, realize a rapid increase of temperature, reduce temperature loss caused by moisture-removing, enhance a speed of heat absorption, reduce heat loss, have an energy utilization efficiency of up to 90% or more.

An embodiment of a second aspect of the present disclosure provides an electrothermal film layer manufactured by a method for manufacturing an electrothermal film layer according to any one of the above embodiments.

The electrothermal film layer according to embodiments of the present disclosure could convert radiant heat energy into far-infrared heat energy, realize a rapid increase of temperature, reduce temperature loss caused by moisture-removing, enhance a speed of heat absorption, reduce heat loss, so as to effectively improve radiation heat conduction efficiency and to achieve the purpose of energy conservation, as well as to better meet the requirements of the country for the energy conservation of the product. Cooking appliances with such an electrothermal film layer are more practical.

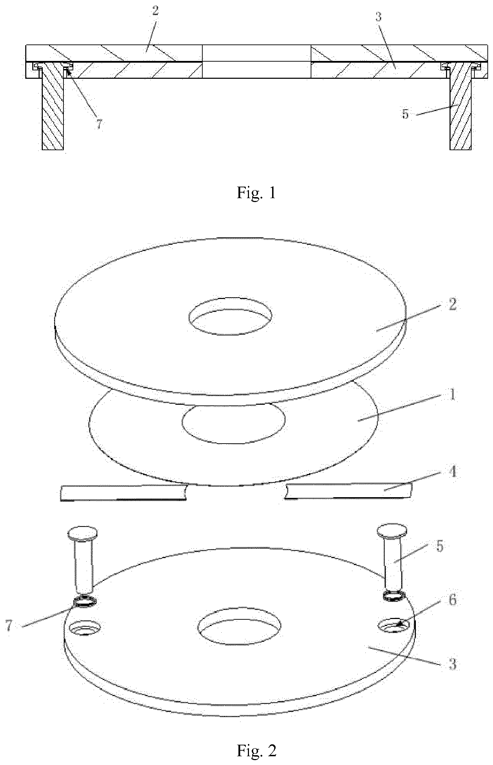

An embodiment of a third aspect of the present disclosure provides an electric heating disc, as shown in Figs. 1 and 2, including: a disk body; and an electrothermal film layer 1 as described in above embodiments, the electrothermal film layer 1 is attached to the disc body.

In the electric heating disc according to an embodiment of the present disclosure, the electrothermal film layer 1 could convert radiant heat energy into far-infrared heat energy during use, realize a rapid increase of temperature of cookware, reduce temperature loss caused by moisture-removing, enhance a speed of heat absorption, reduce heat loss, thereby effectively improving the radiation heat conduction efficiency (reaching up to 96% or more), achieving the purpose of energy conservation, as well as better meeting the requirements of the country for the energy conservation of the product. Cooking appliances with such an electric heating disc are more practical.

Impedance of the electrothermal film layer according to the present disclosure decreases with a temperature increase, which could effectively improve the stability of the membrane resistance of the electrothermal film layer, therefore solving the problem of power stability of the far-infrared electric heating disc.

In addition, the electric heating disc according to the above embodiments of the present disclosure further has the following additional technical features.

In an embodiment of the present disclosure, as shown in Figs. 1 and 2, the disc body includes an upper disc body 2, to a lower surface of which the electrothermal film layer is attached and a lower disc body 3 located below the upper disc body 2 and assembled with the upper disc body 2, in order to better utilize heat energy to rapidly heat the pot body placed on an upper surface of the lower disc body 3.

Of course, the electrothermal film layer 1 may be attached to an upper surface of the upper disc body 2 or to the upper or lower surface of the lower disc body 3, etc.

Furthermore, as shown in Fig. 2, an electrode film 4 is provided on the lower surface of the upper disc body 2, and the electrode film 4 is electrically connected with the electrothermal film layer 1. An electrode 5 is provided on the lower disc body 3. An upper end of the electrode 5 is electrically connected with the electrode film 4. A lower end of the electrode 5 extends downwardly through the lower disc body 3 and is connected with the power supply to supply power to the electrothermal film layer 1.

Of course, the purpose of the present disclosure could also be achieved if the electrode film 4 is replaced with an electric conductor such as a power supply line, which is intended to fall into the scope of the present disclosure, and will not be elaborated herein.

Further, as shown in Fig. 1 and Fig. 2, an upper surface of the lower disc body 3 has a stepped hole 6. The lower end of the electrode 5 extends downwardly through the stepped hole 6. The upper end of the electrode 5 is supported by a stepped surface of the stepped hole 6. A spring 7 is provided between the upper end of the electrode 5 and the stepped surface of the stepped hole 6. The spring 7 is adapted to support the upper end of the electrode 5 so as to make the electrode 5 be pressed against the electrode film 4 as well as to avoid a loose contact between the electrode 5 and the electrode film 4, thereby providing a better electrical connection performance.

The stepped surface of the stepped hole 6 faces upward.

As shown in Fig. 1 and Fig. 2, the electrothermal film layer 1 has an annular shape, and two electrode films 4, two electrodes 5, and two stepped holes 6 are symmetrically arranged, and inner ends of the two electrode films 4 are located at an inner edge of the electrothermal film layer 1, while outer ends of the two electrode films 4 are located at an outer edge of the electrothermal film layer 1, and the upper end surfaces of the two electrodes 5 are pressed against outer edges of the two electrode films 4, respectively, in order to energize with the whole electrothermal film layer 1 to achieve a maximum utilization of the electrothermal film layer 1.

The upper disc body 2 is a glass carrier with a high temperature resistance, and the lower disc body 3 is a ceramic carrier with a high temperature resistance.

It is also possible that the lower disc body 3 is a glass carrier with a high temperature resistance, and the upper disc body 2 is a ceramic carrier with a high temperature resistance. The purpose of the present disclosure could also be achieved in such a manner.

Specifically, cross sections of the upper ends of the two electrodes 5 both have an elliptical shape of 8.0 mm × 10.0 mm, and the two electrode films 4 are manufactured by a mask sputtering process and each have a thickness of 3 to 10 µm, a width of 10.0 mm and a length of 46.0 to 56.0 mm. The electrothermal film layer is formed by spraying with a thickness in a proportional function from 0.5 µm at the inner edge to 1.5 µm at the outer edge at a spraying power of 3 to 5 watts per square centimeter so as to avoid a temperature imbalance of a heated surface.

At a joint of the electrode film 4 made of an alloy and the upper end surface of the electrode 5, a total current and an allowable working current density should be greater than or equal to 3.0 times a total power of the electrothermal film layer. A thickness of an upper portion of the electrode 5 above the stepped surface is 1.0 mm. With a spring force provided by the spring 7, the electrode 5 jacked up by the spring 7 is in close contact with the electrode film 4 to build a contact connection between the electrode 5 and the electrode film 4. The lower end of the electrode 5 is tightly connected with the power supply, so that the safety, stability and reliability of the connection between the power supply and the (nano-far-infrared) electric heating disc could be improved.

The electrothermal film layer 1 manufactured under this condition has a resistivity of up to 4 × 10⁻⁴ Ω•cm, a visible light transmittance of greater than 90%, and an average power density of up to 32 W/cm2, ensuring the stability and reliability of the far-infrared electric heating disc.

The electric heating disc of the present disclosure is a nano-far-infrared electric heating disc, that is, the electrothermal film layer 1 is a nano-far-infrared electrothermal film layer 1.

An embodiment of a fourth aspect of the present disclosure provides a cooking appliance (not shown) including an electric heating disc according to any one of the above embodiments.

The cooking appliance includes an induction cooker, a rice cooker and an electric pressure cooker, and the cooking appliance has all the advantages of any one of the above embodiments, embodiments, which will be elaborated herein.

In conclusion, the method for manufacturing the electrothermal film layer according to embodiments of the present disclosure is simple and easy to operate, the electrothermal film layer manufactured by this method could convert radiant heat energy into far-infrared heat energy, realize a rapid increase of temperature, reduce temperature loss caused by moisture-removing, enhance a speed of heat absorption, reduce heat loss, so as to effectively improve radiation heat conduction efficiency and to achieve the purpose of energy conservation, as well as to better meet the requirements of the country for the energy conservation of the product.

## Claims

1. A method for manufacturing an electrothermal film layer (1), wherein the electrothermal film layer (1) is formed on a surface of an insulating substrate by subjecting a mixture comprising tin dioxide, antimony and fluorine to spraying, deposition or evaporation, and the electrothermal film layer and the insulating substrate are subjected to annealing, **characterised in that** based on a total mass of the mixture an amount of antimony is in a range of 1.0 to 2.0%, and an amount of fluorine is in a range of 0.1 to 0.3%.

2. The method according to claim 1, wherein a mass ratio of tin oxide, antimony and fluorine is 98.35: 1.5: 0.15.

3. The method according to claim 1, wherein the mixture further comprises Cr₂O₃, MnO₂ and Ni₂O₃.

4. The method according to any one of claims 1 to 3, wherein the annealing is performed at a temperature of 450 to 600 °C.

5. The method according to any one of claims 1 to 3, wherein the annealing is performed for 15 to 25 minutes.

6. The method according to any preceding claim , wherein the electrothermal film layer is formed by spraying with a thickness in a proportional function from 0.5 µm at the inner edge to 1.5 µm at the outer edge at a spraying power of 3 to 5 watts per square centimeter.

## Patentansprüche

1. Verfahren zur Herstellung einer elektrothermischen Filmschicht (1), wobei die elektrothermische Filmschicht (1) auf einer Oberfläche eines Isolierungssubstrats gebildet wird, indem ein Gemisch, das Zinndioxid, Antimon und Fluor aufweist, Sprühen, Abscheidung oder Verdampfung unterzogen wird, und die elektrothermische Filmschicht und das Isolierungssubstrat Glühen unterzogen werden, **dadurch gekennzeichnet, dass** auf Basis einer Gesamtmasse des Gemischs eine Antimonmenge in einem Bereich von 1,0 bis 2,0 % ist und eine Fluormenge in einem Bereich von 0,1 bis 0,3 % ist.

2. Verfahren nach Anspruch 1, wobei ein Massenverhältnis von Zinnoxid, Antimon und Fluor 98,35:1,5:0,15 ist.

3. Verfahren nach Anspruch 1, wobei das Gemisch ferner Cr₂O₃, MnO₂ und Ni₂O₃ aufweist.

4. Verfahren nach einem der Ansprüche 1 bis 3, wobei das Glühen bei einer Temperatur von 450 bis 600 °C durchgeführt wird.

5. Verfahren nach einem der Ansprüche 1 bis 3, wobei das Glühen 15 bis 25 Minuten lang durchgeführt wird.

6. Verfahren nach einem der vorhergehenden Ansprüche, wobei die elektrothermische Filmschicht durch Sprühen mit einer Dicke in einer proportionalen Funktion von 0,5 µm am Innenrand zu 1,5 µm am Außenrand bei einer Sprühleistung von 3 bis 5 Watt pro Quadratzentimeter gebildet wird.

## Revendications

1. Procédé de fabrication d'une couche de film électrothermique (1), dans lequel la couche de film électrothermique (1) est formée sur une surface d'un substrat isolant en soumettant un mélange comprenant du dioxyde d'étain, de l'antimoine et du fluor à une pulvérisation, un dépôt ou une évaporation, et la couche de film électrothermique et le substrat isolant sont soumis à un recuit, **caractérisé en ce que**, sur la base d'une masse totale du mélange, une quantité d'antimoine est comprise dans une plage de 1,0 à 2,0 %, et une quantité de fluor est comprise dans une plage de 0,1 à 0,3 %.

2. Procédé selon la revendication 1, dans lequel un rapport en masse d'oxyde d'étain, d'antimoine et de fluor est de 98,35:1,5:0,15.

3. Procédé selon la revendication 1, dans lequel le mélange comprend en outre Cr₂O₃, MnO₂ et Ni₂O₃.

4. Procédé selon l'une quelconque des revendications 1 à 3, dans lequel le recuit est réalisé à une température de 450 à 600 °C.

5. Procédé selon l'une quelconque des revendications 1 à 3, dans lequel le recuit est réalisé pendant 15 à 25 minutes.

6. Procédé selon une quelconque revendication précédente, dans lequel la couche de film électrothermique est formée par pulvérisation avec une épaisseur selon une fonction proportionnelle allant de 0,5 µm au niveau du bord intérieur à 1,5 µm au niveau du bord extérieur à une puissance de pulvérisation de 3 à 5 watts par centimètre carré.
